# EUROPÄISCHE PATENTANMELDUNG

(11) **EP 1 030 210 A2**
(43) Veröffentlichungstag der Anmeldung: **23.08.2000**
(21) Anmeldenummer: 99125066.3
(22) Anmeldetag: 16.12.1999
(51) Int. Cl.: G02F 1/1335

(54) **Flüssigkristallanzeige**

(30) Priorität: 17.02.1999 DE 19906483
(71) Anmelder: Mannesmann VDO Aktiengesellschaft, 60388 Frankfurt am Main (DE)
(72) Erfinder: Brandt, Peter, 63739 Aschaffenburg (DE)
(74) Vertreter: Klein, Thomas, Dipl.-Ing.

(57) **Zusammenfassung**

Bei einer Flüssigkristallanzeige (1) ist ein zwischen einer rückwärtigen Lichtquelle (8) und einer Flüssigkristallzelle (3) angeordnetes optisches Element (2) wahlweise auf einen im wesentlichen transmissiven oder auf einen im wesentlichen reflektiven Betriebszustand einstellbar. Das als Flüssigkristallfolie ausgeführte optische Element (2) hat dabei im Vergleich zu konventionellen, nicht einstellbaren Transflektoren im transmissiven Betrieb erheblich geringere Verluste der Lichtdichte. Dadurch kann auch eine Lichtquelle (8) geringerer Leistungsstärke mit einem entsprechend reduzierten Energieverbrauch verwendet werden, wobei zugleich eine unerwünscht hohe Erwärmung der Flüssigkristallanzeige (1) verhindert werden kann. Weiterhin ist durch den erhöhten Wirkungsgrad auch eine Negativdarstellung bei hoher Umfeldhelligkeit möglich.

## Beschreibung

Die Erfindung betrifft eine Flüssigkristallanzeige, insbesondere für ein Fahrzeug, mit einer Flüssigkristallzelle zwischen zwei begrenzenden Substraten, sowie einem in Beobachtungsrichtung hinter der Flüssigkristallzelle angeordneten optischen Element, welches sowohl reflektive als auch zur Beleuchtung der Flüssigkristallanzeige mittels einer hinter dem optischen Element angeordneten Lichtquelle transmissive Eigenschaften aufweist.

Flüssigkristallanzeigen der genannten Art sind bei modernen Kraftfahrzeugen inzwischen weit verbreitet und damit bekannt. Die sowohl reflektiven als auch transmissiven Eigenschaften des optischen Elementes ermöglichen dabei die Verwendung der Flüssigkristallanzeige bei unterschiedlichen Lichtverhältnissen im Umfeld der Flüssigkristallanzeige. Im allgemeinen ist hierzu insbesondere im Interesse einer leichten Ablesbarkeit zumeist eine Umschaltung von Tagbetrieb auf Nachtbetrieb vorgesehen.

Grundsätzlich sind dabei zwei zueinander inverse Darstellungsformen möglich. Zum einen kann die Darstellung von Informationen mit Hilfe von dunklen Zeichen in einem ansonsten hellen Darstellungsfeld (Positivdarstellung) oder umgekehrt mittels heller Zeichen im dunklen Darstellungsfeld (Negativdarstellung) erfolgen.

Die Positivdarstellung eignet sich wegen der vergleichsweise hellen Darstellung vorzugsweise für Anwendungen bei einer intensiven Umfeldbeleuchtung (Tagbetrieb). Bei einer schwachen Umfeldbeleuchtung (Nachtbetrieb) würde die vergleichsweise große helle Fläche wegen der Blendwirkung der hellen Hintergrundfläche störend wirken und dadurch zu einer schlechteren Ablesbarkeit oder auch zur Ablenkung des Kraftfahrzeugführers führen. Die Positivdarstellung ist daher im Nachtbetrieb allenfalls bei Einsatz einer schwachen Lichtquelle geeignet.

Die Negativdarstellung liefert bei schwacher Umfeldbeleuchtung (Nachtbetrieb) eine brillante Darstellung in Verbindung mit einer geeigneten Hintergrundbeleuchtung. Um auch im Tagbetrieb eine kontrastreiche Darstellung zu erhalten, muss die Beleuchtungseinrichtung eine hohe Beleuchtungsstärke bzw. Lichtdichte aufweisen.

Während die erforderliche Beleuchtungsstärke bei Tagbetrieb überwiegend durch Reflexion des Sonnenlichtes erreicht wird, ist bei Nachtbetrieb eine elektrische Lichtquelle erforderlich. Hierzu dient das optische Element, welches einerseits das eintretende Sonnenlicht reflektiert, andererseits aber zugleich auch eine hohe Transmission für das Licht der dahinter angeordneten Lichtquelle aufweist. Man spricht daher aufgrund dieser Doppelfunktion von einem Transflektor.

Nachteilig wirkt sich bei solchen als Transflektor ausgeführten optischen Elementen aus, dass neben dem Materialaufwand zugleich auch bei der Transmission des Lichtes durch den Transflektor große Verluste bei der Lichtdichte entstehen. Daher erfordern Transflektoren leistungsstarke Lichtquellen, die neben einem hohen Energieverbrauch auch eine entsprechend große Erwärmung bewirken, so dass zusätzlich eine Kühlung der Flüssigkristallanzeige vorgesehen werden muss.

Der Erfindung liegt das Problem zugrunde, eine Flüssigkristallanzeige der eingangs genannten Art so zu gestalten, dass der Aufwand zum Betrieb der Flüssigkristallanzeige reduziert werden kann. Insbesondere soll dabei der Energieverbrauch und zugleich der Helligkeitsverlust reduziert werden.

Dieses Problem wird erfindungsgemäß dadurch gelöst, dass das optische Element umschaltbar von einem ersten, im wesentlichen reflektive Eigenschaften aufweisenden Zustand zu einem zweiten, im wesentlichen transmissive Eigenschaften aufweisenden Zustand ausgeführt ist. Hierdurch lassen sich die Eigenschaften des optischen Elementes auf die jeweiligen Anforderungen optimal abstimmen. Bei einem im wesentlichen transmissiven Betriebszustand sind daher die Verluste gegenüber einem konventionellen Transflektor, dessen Eigenschaften im wesentlichen unveränderlich sind und sich daher im Betrieb nicht beeinflussen lassen, erheblich verringert. Der Energieverbrauch kann daher reduziert und zugleich der Wirkungsgrad der Lichtquelle verbessert werden. Weiterhin wird es durch das erfindungsgemäße optische Element zugleich möglich, eine Flüssigkristallanzeige bei Tag wahlweise in einer Positivoder Negativdarstellung zu betreiben, da die hierzu erforderliche hohe Lichtdichte mittels des erfindungsgemäßen optischen Elementes ohne hohe Verluste und die damit einhergehende Wärmeentwicklung erreicht werden kann.

Besonders günstig ist hierbei auch eine Weiterbildung der Erfindung, bei der das optische Element zur Einstellung zusätzlicher Zwischenstufen mit sowohl reflektiven als auch transmissiven Eigenschaften ausgeführt ist. Hierdurch ist es möglich, einerseits die Helligkeit des Umfeldes und andererseits zusätzlich das von der Lichtquelle ausgehende Licht zu nutzen. Daher kann eine gleichbleibend starke Beleuchtung der Flüssigkristallzelle sichergestellt und die so ausgeführte Flüssigkristallanzeige energiesparend betrieben werden. Weiterhin kann mittels des optischen Elementes die Helligkeit der Lichtquelle problemlos gesteuert werden, so dass auch solche Lichtquellen verwendet werden können, bei denen eine elektrische Regelung der Helligkeit (Dimmung) mit erheblichem Aufwand verbunden oder weitgehend unmöglich ist.

Das optische Element könnte bewegliche oder einstellbare Reflektoren oder mechanisch verfahrbare Spiegelflächen aufweisen. Eine besonders vorteilhafte Weiterbildung der Erfindung ist hingegen dann gegeben, wenn das optische Element eine Flüssigkristallzelle aufweist. Hierdurch lässt sich eine kompakte Ausführungsform erreichen, die zudem leicht steuerbar ist und einen hohen Wirkungsgrad aufweist. Hierbei werden die reflektive und die transmissive Eigenschaft durch entsprechende Ansteuerung der Flüssigkristallzelle erreicht, die hierzu entweder eine helle, beispielsweise auch milchig trübe und reflektive Oberflächenbeschaffenheit oder weitgehend transparente Eigenschaften annimmt.

Eine andere besonders günstige Weiterbildung der Erfindung ist dann gegeben, wenn das optische Element eine Flüssigkristallfolie aufweist. Hierdurch wird eine einfache Anordnung des optischen Elementes zwischen der Lichtquelle und der Flüssigkristallzelle der Flüssigkristallanzeige ermöglicht, wobei der hierzu erforderliche Platz vergleichsweise gering ist. Zugleich sind dabei unterschiedliche Formgebungen, beispielsweise gewölbte Oberflächen denkbar, die eine Steigerung des Wirkungsgrades, insbesondere beim reflektiven Betrieb, ermöglichen.

Von besonderem Vorteil ist es, wenn das optische Element eine Guest-Host-Flüssigkristallzelle oder -folie aufweist. Ist das optische Element eine Nematic-Curvilinear-Aligned-Phase-Guest-Host-Flüssigkristallfolie, so kann vorteilhaft zwischen einer klar transparenten und einer diffusen milchig-weißen Durchleuchtbarkeit umgeschaltet werden.

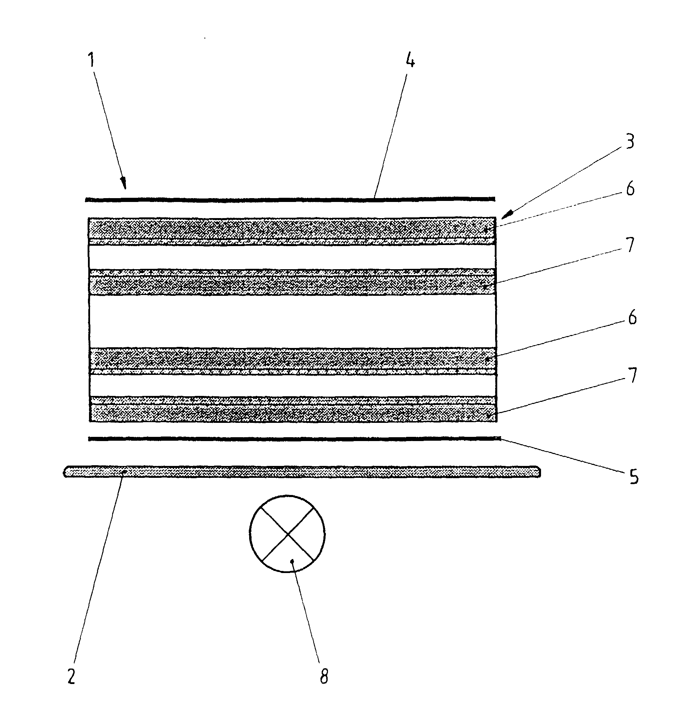

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt eine seitliche, teilweise geschnittene Darstellung einer Flüssigkristallanzeige 1 mit einem erfindungsgemäßen optischen Element 2. Zu erkennen ist eine beispielsweise als DSTN-Zelle ausgeführte Flüssigkristallzelle 3 der Flüssigkristallanzeige 1, welche durch zwei Polarisationsfilter 4, 5 außenseitig begrenzt ist. Die Polarisationsfilter 4, 5 schließen zwei Einzelzellen mit jeweils auf einem Substrat aufgebrachten Elektroden 6 und 7 ein, zwischen denen ein nicht dargestellter Flüssigkristall eingeschlossen ist. An der einem Betrachter abgewandten Seite der Flüssigkristallzelle 3 ist das als schaltbare Folie ausgeführte optische Element 2 angeordnet. Diese schaltbare Folie ermöglicht zumindest einen transmissiven Betriebszustand, bei dem das Licht einer hinter dem optischen Element 2 angeordneten Lichtquelle 8 im wesentlichen ungehindert hindurchtreten und in die Flüssigkristallzelle 3 einstrahlen kann und einen im wesentlichen reflektiven Betriebszustand, bei dem das Licht des die Flüssigkristallanzeige 1 umgebenden Umfeldes (Auflicht) in die Flüssigkristallzelle 3 eintritt und an dem optischen Element 2 reflektiert wird. Weiterhin sind Zwischenstufen möglich, bei denen das Licht der Lichtquelle 8 und das Umfeldlicht gleichzeitig in die Flüssigkristallzelle 3 einstrahlen. Durch das als schaltbare Flüssigkristallfolie ausgeführte optische Element 2 sind die Verluste des von der Lichtquelle 8 ausgehenden Lichtes im transmissiven Betriebszustand des optischen Elementes 2 erheblich geringer als bei konventionellen transflektiven optischen Elementen. Daher ist der Helligkeitsverlust und die mit einer entsprechend stärkeren Lichtquelle verbundene unerwünschte Erwärmung erheblich reduziert. Zugleich ist dadurch wahlweise eine Positiv- oder Negativdarstellung mit der Flüssigkristallanzeige 1 möglich, da durch das erfindungsgemäße optische Element 2 auch tagsüber aufgrund der verringerten Helligkeitsverluste ein ausreichend hoher Kontrast (und damit eine gute Ablesbarkeit) realisierbar ist und zugleich aufgrund einer einfachen Regelung der Helligkeit durch Einstellung eines lediglich teilweise transmissiven Zustandes auch eine positive Darstellung bei Dunkelheit ohne störende Blendungen erreicht werden kann.

## Patentansprüche

1. Flüssigkristallanzeige, insbesondere für ein Fahrzeug, mit einer Flüssigkristallzelle zwischen zwei begrenzenden Substraten, sowie einem in Beobachtungsrichtung hinter der Flüssigkristallzelle angeordneten optischen Element, welches sowohl reflektive als auch zur Beleuchtung der Flüssigkristallanzeige mittels einer hinter dem optischen Element angeordneten Lichtquelle transmissive Eigenschaften aufweist, **dadurch gekennzeichnet**, dass das optische Element (2) umschaltbar von einem ersten, im wesentlichen reflektive Eigenschaften aufweisenden Zustand zu einem zweiten, im wesentlichen transmissive Eigenschaften aufweisenden Zustand ausgeführt ist.

2. Flüssigkristallanzeige nach Anspruch 1, **dadurch gekennzeichnet**, dass das optische Element (2) zur Einstellung zusätzlicher Zwischenstufen mit sowohl reflektiven als auch transmissiven Eigenschaften ausgeführt ist.

3. Flüssigkristallanzeige nach Anspruch 1 oder 2, **dadurch gekennzeichnet**, dass das optische Element (2) eine Flüssigkristallzelle aufweist.

4. Flüssigkristallanzeige nach einem der vorhergehenden Ansprüche, **dadurch gekennzeichnet**, dass das optische Element (2) eine Flüssigkristallfolie aufweist.

5. Flüssigkristallanzeige nach Anspruch 3 oder 4, **dadurch gekennzeichnet**, dass das optische Element (2) eine Guest-Host-Flüssigkristallzelle oder -folie aufweist.

6. Flüssigkristallanzeige nach einem der vorhergehenden Ansprüche, **dadurch gekennezeichnet**, dass das optische Element (2) eine Nematic-Curvilinear-Aligned-Phase-Guest-Host-Flüssigkristallfolie ist.
